# EUROPEAN PATENT APPLICATION

(11) **EP 3 696 779 A1**
(43) Date of publication of application: **19.08.2020**
(21) Application number: 20153953.3
(22) Date of filing: 27.01.2020
(51) Int. Cl.: G07G 1/01, G07G 1/00, G06Q 30/02

(54) **INFORMATION PROCESSING APPARATUS**

(30) Priority: 12.02.2019 JP 2019022632
(71) Applicant: Toshiba TEC Kabushiki Kaisha, Shinagawa-ku Tokyo 141-8562 (JP)
(72) Inventor: Nakatsukasa, Fumio, Shinagawa-ku, Tokyo 141-8562 (JP); Ito, Mikio, Shinagawa-ku, Tokyo 141-8562 (JP); Ishihara, Satoru, Shinagawa-ku, Tokyo 141-8562 (JP); Kogure, Kazunari, Shinagawa-ku, Tokyo 141-8562 (JP); Kudou, Daigo, Shinagawa-ku, Tokyo 141-8562 (JP)
(74) Representative: Bandpay & Greuter

(57) **Abstract**

An information processing apparatus according to an embodiment includes a controller, a display device, and a storage device. The controller detects a commodity code of a commodity. If a first commodity code of a first commodity is detected, the controller determines whether a second commodity is registered as associated with the first commodity. The display device outputs content of the privilege data for the second commodity in response to determining the second commodity is registered as associated with the first commodity. In response to detecting a second commodity code of the second commodity, the storage device applies a privilege corresponding to the privilege data to the second commodity and stores commodity information of the second commodity.

## Description

### FIELD

Embodiments described herein relate generally to an information processing apparatus in a store such as a retail store.

### BACKGROUND

It is hard to secure human resources in stores because of serious labor shortage in retail companies. Therefore, measures, such as introduction of self-registers and semi-self-registers, are taken in order to reduce personnel related to operation of POS (Point Of Sales) terminals and customer attendance. Further, in recent years, systems capable of executing registration and settlement processing for purchase target commodities using electronic apparatuses such as smartphones carried by customers are also examined.

In sales stores,forexample, provision of various kinds of information and provision of various privileges that can reduce sales prices of commodities are performed for sales promotion of commodities. For example, a method of issuing coupons for, for example, discounting prices of commodities is widely used. However, a general coupon can only be used for, if settlement for one transaction is completed, the next and subsequent shopping experience within a predetermined period.

That is, it was not possible to provide a privilege for sales promotion that can be used in present shopping in a store during the shopping. Privilege information, such as discount of commodities, was able to be provided before shopping or during shopping by advertisements, notices, and the like. However, the privilege information is information for all customers. It was not possible to provide appropriate privilege information to individual shoppers.

### DESCRIPTION OF THE DRAWINGS

FIG. 1 is an overall configuration diagram of a store system according to an embodiment;
FIG. 2 is a block diagram illustrating a main part circuit configuration of a store server;
FIG. 3 is a block diagram illustrating a main part circuit configuration of an accounting machine;
FIG. 4 is a block diagram illustrating a main part circuit configuration of a check-in terminal;
FIG.5 is a block diagram illustrating a main part circuit configuration of an electronic apparatus;
FIG. 6 is a schematic diagram illustrating a main data structure of a member data record registered in a member database of the store server;
FIG. 7 is a schematic diagram illustrating a data structure in transaction detail data;
FIG. 8 is a diagram illustrating a data structure in sales promotion management data in the embodiment;
FIG. 9 is a diagram illustrating a data structure of coupon type data illustrated in FIG. 8;
FIG. 10 is a flowchart for explaining the operation of the store server;
FIG. 11 is a flowchart for explaining the operation of the electronic apparatus;
FIG. 12 is a flowchart for explaining the operation of the electronic apparatus;
FIG. 13 is a flowchart for explaining the operation of the electronic apparatus;
FIG. 14 is a diagram illustrating an example of a commodity list screen;
FIG. 15 is a diagram illustrating an example of a commodity code reading screen;
FIG. 16 is a diagram illustrating an example of a privilege information display screen; and
FIG. 17 is a diagram illustrating an example of an information list screen.

### DETAILED DESCRIPTION

An object of embodiments is to provide an information processing apparatus capable of providing, during shopping in a store, information for sales promotion of commodities that can be used for the shopping.

An information processing apparatus according to an embodiment includes , a controller,a displaydevice, and a storage device. The controller detects a commodity code of a commodity. If a first commodity code of a first commodity is detected, the controller determines whether a second commodity is registered as associated with the first commodity. The display device outputs content of the privilege data for the second commodity in response to determining the second commodity is registered as associated with the first commodity. In response to detecting a second commodity code of the second commodity, the storage device applies a privilege corresponding to the privilege data to the second commodity and stores commodity information of the second commodity.

When the controller detects the product code, the controller sends the detected product code to a server connected to the information processing apparatus, and the server transmits the privilege information data to the information processing apparatus. If all of the privilege information data is transmitted to the information processing apparatus from the server, the data communication amount considerably increases.

Also, in this case, even in the information processing apparatus that receives data from the server, the amount of data processing for searching for privilege information data applicable to the detected product is increased, and the processing speed is reduced.

According to the present invention, it is determined whether there is a second product in which the privilege data corresponding to the first product is set. If it is determined that the second product is set, the privilege information data corresponding to the second product is provided to the information processing apparatus whereby the data communication amount can be reduced, and the data processing amount for searching for applicable privilege information data in real time can also be reduced. Thus, the processing speed can be improved by reducing the quantity of data to be processed.

Preferably, the storage device is further configured to store commodity information of the first commodity in response to detecting the first commodity code of the first commodity, and apply the privilege and store the commodity information of the second commodity if the commodity information of the first commodity is stored.

Preferably, if the stored commodity information of the first commodity is deleted, the storage device is further configured to change the commodity information of the second commodity to commodity information to which the privilege is not applied. Alternatively, if the second commodity code of the second commodity is detected, the storage device is further configured to store the commodity information of the second commodity if the first commodity code is not detected earlier and, if the first commodity code of the first commodity is detected, the storage device is further configured to change the stored commodity information of the second commodity to commodity information to which the privilege is applied.
Preferably, the controller is further configured to determine a plurality of the second commodities set in association with the first commodity.
The present invention further relates to a method, comprising: detecting a commodity code of a commodity; determining, responsive to detecting a first commodity code of a first commodity, whether a second commodity is registered as associated with the first commodity; outputting content of privilege data set for the second commodity in response to determining that the second commodity is registered as associated with the first commodity; and applying, responsive to detecting a second commodity code of the second commodity, a privilege corresponding to the privilege data to the second commodity and storing commodity information of the second commodity. The method may comprise: storing commodity information of the first commodity in response to detecting the first commodity code of the first commodity; and applying the privilege and store the commodity information of the second commodity if the commodity information of the first commodity is stored.

The method may comprise detecting that stored commodity information of the first commodity is deleted.

The method may comprise changing the commodity information of the second commodity to commodity information to which the privilege is not applied.

The method may further comprise in response to detecting the second commodity code of the second commodity, storing the commodity information of the second commodity if the first commodity code is not detected earlier.

The method may comprise: in response to detecting the first commodity code of the first commodity, changing the stored commodity information of the second commodity to commodity information to which the privilege is applied.
The method may comprise determining a plurality of the second commodities set in association with the first commodity.

The present invention also relates to a store system provided in a store, the system comprising at least one aforementioned information processing apparatus, wherein the information processing apparatus is located in the store, and the store system further comprises a server connected to the information processing apparatus.

An embodiment is explained below with reference to the drawings.

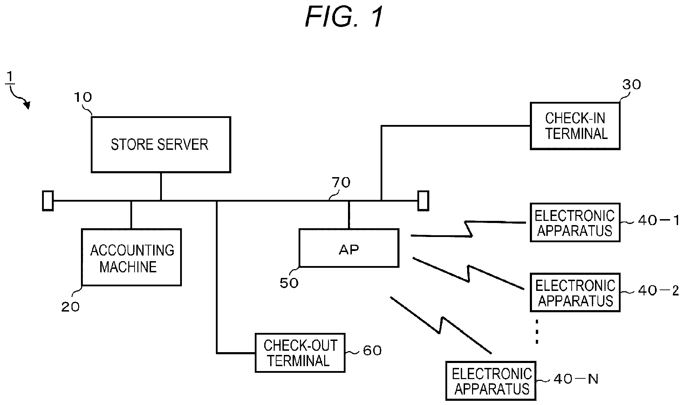

FIG. 1 is an overall configuration diagram of a store system 1 according to this embodiment. The store system 1 is a self-type system in which processing from commodity scanning for registering information concerning a sales promotion target commodity to settlement processing can be executed by operation of an electronic apparatus such as a smartphone by a customer. In the commodity scanning, readingofa commodity code (identification data) attached to the commodity is executed.

The store system 1 in this embodiment includes a store server 10, an accounting machine 20, a check-in terminal 30, an access point (AP) 50, and a check-outterminal 60. At least one accounting machine 20 only has to be set. In FIG. 1, only one check-in terminal 30, one check-out terminal 60, and one access point 50 are illustrated. However, twoormorecheck-in terminals 30, two or more check-out terminals 60, and two or more access points 50 may be present depending on the size and the like of a store.

The store server 10, the accounting machine 20, the check-in terminal 30, the access point 50, and the check-out terminal 60 are connected to a network 70 such as a LAN (Local Area Network).

Electronic apparatuses 40 (40-1, ..., and 40-N) carried by customers can be incorporated in the store system 1. The electronic apparatuses 40 are information processing apparatuses such as smartphones, cellular phones, personal computers, tablet terminals, and portable game terminals. If the electronic apparatuses 40 are incorporated in the store system 1, the electronic apparatuses 40 perform wireless communication with the access point 50. The electronic apparatuses 40 may be dedicated terminals used for registration of commodity information provided in the store. For example, the electronic apparatuses 40 are terminals attached to carts used in the store.

The check-in terminal 30 is set in an entrance or the like of the store. The check-in terminal 30 has a check-in function of authenticating a customer who comes to the store and notifying the authentication of the customer to the store server 10. The authentication of the customer by the check-in terminal 30 can be carried out by any one of a plurality of methods or carried out by combining the plurality of methods. For example, as a first authentication method, thereisamethod of causing a display device (a touch panel) of the check-in terminal 30 to display a code (for example, a two-dimensional code) peculiar to the store and causing the electronic apparatus 40 to read the code. As a second authentication method, there is a method of causing the electronic apparatus 40 to display a terminal code (including, for example, data of a member ID) peculiar to the terminal and causing the check-in terminal 30 to read the terminal code. Further, as a third authentication method, there is a method of, without using the electronic apparatus 40, inputting biological information of a customer, collating the biological information with biological authentication data recorded during member registration in advance, and authenticating the customer. As the biological information for authenticating the customer (a member), data indicating characteristics such as a face image, a fingerprint, voice, an iris, and a vein pattern can be used.

The check-out terminal 60 is set in an exit or the like of the store. The check-out terminal 60 has a check-out function of authenticating a customer who finishes shopping and notifying the authentication of the customer to the store server 10. The authentication of the customer by the check-out terminal 60 can be executed in the same manner as the authentication of the customer by the check-in terminal 30 explained above. If the customer is authenticated in the check-out terminal 60, settlement processing concerning commodities, commodity information of which is registered, is performed using the electronic apparatus 40.

The electronic apparatus 40 is implemented with a function with which a customer himself or herself performs operation such as information input of a commodity that the customer purchases. Identification information (terminal IDs) is set respectively for the plurality of electronic terminals 40 and managed in the store server 10.

The store server 10 controls the entire store system 1. The store server 10 in this embodiment has a function of a POS system for sales promotion management of commodities and a function of a sales promotion system for sales promotion. The sales promotion system provides information for sales promotion to a checked-in customer (member) during shopping.

The store server 10 (the POS system) creates, from commodity codes (identification data) input in the electronic apparatus 40, transaction detail data including commodity information of commodities to be purchased by a customer. If settlement of registered commodities is performed in the accounting machine 20, the store server 10 specifies a customer who performs accounting. The store server 10 transmits transaction detail data of commodities purchased by the customer to the accounting machine 20 used for the accounting by the customer. The transaction detail data may be generated in the electronic apparatus 40 to which commodity codes are input. In this case, the store server 10 receives the transaction detail data from the electronic apparatus 40 and stores the transaction detail data.

In this embodiment, the sales promotion system is realized in the store server 10. However, the sales promotion system can also be realized by an apparatus different from the store server 10. The sales promotion system is realized by, for example, a computer connected to the network 70.

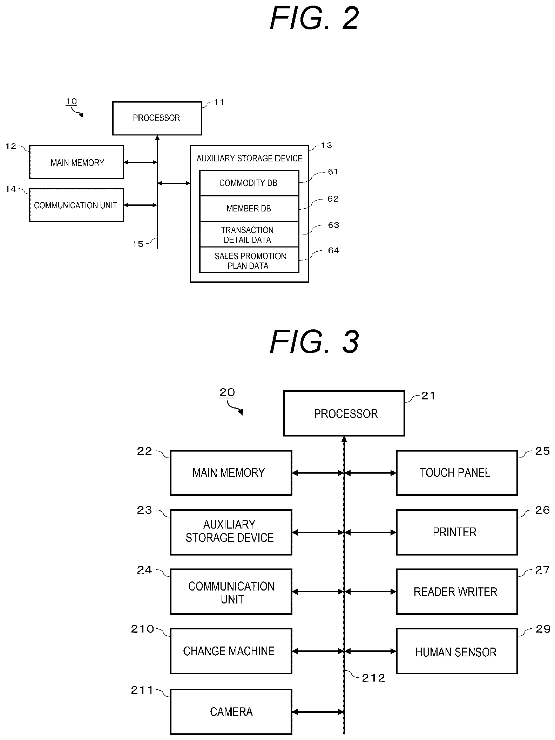

FIG. 2 is a block diagram illustrating a main part circuit configuration of the store server 10. The store server 10 includes a processor 11, a main memory 12, an auxiliary storage device 13, a communication unit 14, and a system transmission line 15. The system transmission line 15 includes an address bus, a data bus, and a control signal line. In the store server 10, the processor 11, the main memory 12, the auxiliary storage device 13, and the communication unit 14 are connected to the system transmission line 15. In the store server 10, a computer is configured by the processor 11, the main memory 12, and the auxiliary storage device 13 and the system transmission line 15 that connects the processor 11, the main memory 12, and the auxiliary storage device 13.

The processor 11 is equivalent to a central part of the computer. The processor 11 controls the sections in order to realize various functions of the store server 10 according to an operating system or application programs. The processor 11 is, for example, a CPU.

The main memory 12 is equivalent to a main storage portion of the computer. The main memory 12 includes a nonvolatile memory region and a volatile memory region. The main memory 12 stores the operating system or the application programs in the nonvolatile memory region. The main memory 12 sometimes stores, in the nonvolatile or volatile memory region, data necessary for the processor 11 in executing processing for controlling the sections. The main memory 12 uses the volatile memory region as a work area in which data is rewritten as appropriate by the processor 11. The nonvolatile memory region is, for example, a ROM. The volatile memory region is, for example, a RAM.

The auxiliary storage device 13 is equivalent to an auxiliary storage portion of the computer. For example, a HDD, an SSD, or the like can be the auxiliary storage device 13. The auxiliary storage device 13 saves, for example, data used by the processor 11 in performing various kinds of processing or data created by the processing in the processor 11. The auxiliary storage device 13 sometimes stores the application programs.

For example, a commodity database 61 and a member database 62 are stored in the auxiliary storage device 13. In the auxiliary storage device 13, a region for storing transaction detail data 63 corresponding to a plurality of transactions and a region for storing sales promotion management data 64 for managing sales promotion are provided.

A commodity data record created for each of commodities sold in the store is described in the commodity database 61. The commodity data record includes items such as a commodity ID, a commodity name, and a prices. The commodity ID is a unique code set for each of the commodities in order to individually identify the commodities. The commodity name and the price are a name of a commodity specified by the commodity ID and a sales price per one item of the commodity.

The communication unit 14 controls data communication performed according to a communication protocol between the store server 10 and the accounting machine 20, the check-in terminal 30, the check-out terminal 60, or the electronic apparatus 40 connected to the store server 10 via the network 70.

FIG. 3 is a block diagram illustrating a main part circuit configuration of the accounting machine 20. The accounting machine 20 includes a processor 21, a main memory 22, an auxiliary storage device 23, a communication unit 24, a touch panel 25, a printer 26, a reader writer 27, a human sensor 29, a change machine 210, a camera 211, and a system transmission line 212. The system transmission line 212 includes an address bus, a data bus, and a control signal line. In the accounting machine 20, the processor 21, the main memory 22, the auxiliary storage device 23, the communication unit 24, the touch panel 25, the printer 26, the reader writer 27, the human sensor 29, and the camera 211 are connected to the system transmission line 212. In the accounting machine 20, a computer is configured by the processor 21, the main memory 22, and the auxiliary storage device 23 and the system transmission line
212 that connects the processor 21, the main memory 22, and the auxiliary storage device 23.

The processor 21 is equivalent to a central part of the computer. The processor 21 controls the sections in order to realize various functions of the accounting machine 20 according to an operating system or application programs. The processor 21 is, for example, a CPU.

The main memory 22 is equivalent to a main storage portion of the computer. The main memory 22 includes a nonvolatile memory region and a volatile memory region. The main memory
22 stores the operating system and the application programs in the nonvolatile memory region. The main memory 22 sometimes stores, in the nonvolatile or volatile memory region, data necessary for the processor 21 in executing processing for controlling the sections. The main memory 22 uses the volatile memory region as a work area in which data is rewritten as appropriate by the processor 21. The nonvolatile memory region is, for example, a ROM. The volatile memory region is, for example, a RAM.

The auxiliary storage device 23 is equivalent to an auxiliary storage portion of the computer. For example, a HDD, an SSD, or the like can be the auxiliary storage device 23. The auxiliary storage device 23 saves, for example, data used by the processor 21 in performing various kinds of processing or data created by the processing in the processor 21. The auxiliary storage device 23 sometimes stores the application programs.

The communication unit 24 controls data communication performed according to a communication protocol between the accounting machine 20 and the store server 10 connected to the accounting machine 20 via the network 70.

The touch panel 25 is an apparatus functioning as both of an input device and a display device of the accounting machine 20. The touch panel 25 detects a touch position on a displayed screen and outputs information concerning the touch position to the processor 21.

The printer 26 prints various character strings, images or the like on receipt paper to thereby issue a receipt. As the printer 26 of this type, for example, a thermal printer or a dot impact printer can be used.

The reader writer 27 has a function of reading data recorded in a recording medium and a function of writing data in the recording medium. The reader writer 27 may be a contact reader writer or may be a noncontact reader writer. The recording medium is a card for settlement such as a credit card, a debit card, an electronic money card, or a prepaid card. A wireless communication apparatus such as a smartphone having a function equivalent to a function of the card for settlement may be used as the recording medium.

The human sensor 29 detects, using, for example, an infrared ray or ultrasound, presence of a person standing in front of the accounting machine 20. If detecting the presence of the person, the human sensor 29 is turned on.

The change machine 210 receives deposited coins and bills. The change machine 210 discharges coins and bills as change.

The camera 211 photographs, for example, a video (an image) for identification of a customer and identification of a commodity that the customer is about to purchase.

In the identification of the customer, for example, the camera 211 specifies the customer by detecting characteristic data from a face image obtained by photographing the customer and collating the characteristic data with face recognition data (biological information) indicating characteristics of a face image registered by the customer beforehand.

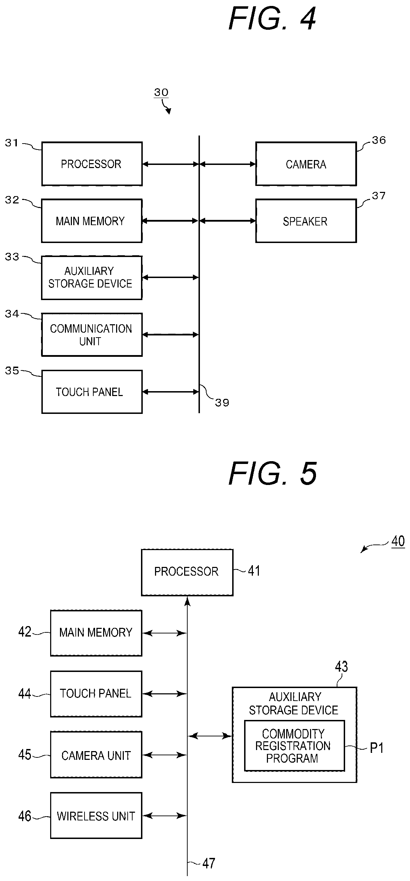

FIG. 4 is a block diagram illustrating a main part circuit configuration of the check-in terminal 30. The check-in terminal 30 includes a processor 31, a main memory 32, an auxiliary storage device 33, a communication unit 34, a touch panel 35, a camera 36, a speaker 37, and a system transmission line 39. The system transmission line 39 includes an address bus, a data bus, and a control signal line. In the check-in terminal 30, the processor 31, the main memory 32, the auxiliary storage device 33, the communication unit 34, the touch panel 35, the camera 36, and the speaker 37 are connected to the system transmission line 39. In the check-in terminal 30, a computer is configured by the processor 31, the main memory 32, and the auxiliary storage device 33 and the system transmission line 39 that connects the processor 31, the main memory 32, and the auxiliary storage device 33.

The processor 31 is equivalent to a central part of the computer. The processor 31 controls the sections in order to realize various functions of the check-in terminal 30 according to an operating system or application programs. The processor 31 is, for example, a CPU (Central Processing Unit).
The main memory 32 is equivalent to a main storage portion of the computer.

The main memory 32 includes a nonvolatile memory region or a volatile memory region. The main memory 32 stores the operating stem or the application programs in the nonvolatile memory region. The main memory 32 sometimes stores, in the nonvolatile or volatile memory region, data necessary for the processor 31 in executing processing for controlling the sections. The main memory 32 uses the volatile memory region as a work area in which data is rewritten as appropriate by the processor 31. The nonvolatile memory region is, for example, a ROM (Read Only Memory). The volatile memory region is, for example, a RAM (Random Access Memory).

The auxiliary storage device 33 is equivalent to an auxiliary storage portion of the computer. For example, a HDD (Hard Disk Drive) or an SSD (Solid State Drive) can be the auxiliary storage device 33. The auxiliary storage device 33 saves, for example, data used by the processor 31 in executing various kinds of processing or data created by the processing in the processor 31. The auxiliary storage device 33 sometimes stores the application programs.

The communication unit 34 controls data communication performed according to a communication protocol between the check-in terminal 30 and the store server 10 connected to the check-in terminal 30 via the network 70. A wireless communication unit may be provided in the check-in terminal
30. The check-in terminal 30 may perform wireless communication according to a wireless communication protocol between the check-in terminal 30 and the access point 50.

The touch panel 35 is an apparatus functioning as both of an input device and a display device of the check-in terminal
30. The touch panel 35 detects a touch position on a displayed image and outputs information concerning the touch position to the processor 31.

The camera 36 photographs a video (an image) in order to authenticate a customer who comes to the store. The camera 36 photographs, for example, an image of a terminal code (for example, a two-dimensional code including data of a member ID) peculiar to the terminal displayed on the electronic apparatus 40 carried by the customer who comes to the store (the second authentication method). If the customer is authenticated based on characteristics of a face image serving as biological information of the customer, the camera 36 photographs a face image of the customer (the third authentication method).

The speaker 37 outputs message voice or the like to the customer who comes to the store.

Explanation of the check-out terminal 60 is omitted assuming that the check-out terminal 60 is configured the same as the check-in terminal 30 explained above.

FIG. 5 is a block diagram illustrating a main part configuration of the electronic apparatus 40. The electronic apparatus 40 includes a processor (controller) 41, a main memory 42, an auxiliary storage device 43, a touch panel 44, a camera unit 45, and a wireless unit 46. The camera unit 45 is configured to photograph and read a commodity code of a commodity to be scanned. The processor 41 may function, as a detecting means by detecting the commodity code of a commodity photographed and read by the camera unit 45. The processor 41, the main memory 42, the auxiliary storage device 43, the touch panel 44, the camera unit 45, and the wireless unit 46 are connected by a system transmission line 47 including an address bus, a data bus, and a control signal line.

In the electronic apparatus 40, a computer is configured by the processor 41, the main memory 42, and the auxiliary storage device 43 and the system transmission line 47 that connects the processor 41, the main memory 42, and the auxiliary storage device 43.

The processor 41 is equivalent to a central part of the computer. The processor 41 controls the sections in order to realize various functions of the electronic apparatus 40 according to an operating system or application programs. The main memory 42 is equivalent to a main storage portion of the computer. The main memory 42 includes a nonvolatile memory region and a volatile memory region. The main memory 42 stores the operating system or the application programs in the nonvolatile memory region. The main memory 42 sometimes stores, in the nonvolatile or volatile memory region, data necessary for the processor 41 in executing processing for controlling the sections. The main memory 42 uses the volatile memory region as a work area in which data is written as appropriate by the processor 41.

The auxiliary storage device 43 is equivalent to an auxiliary storage portion of the computer. For example, a HDD or an SSD may be used as the auxiliary storage device 43. The auxiliary storage device 43 saves data used by the processor
41 in various kinds of processing and data generated by the processing in the processor 41. The auxiliary storage device
43 sometimes stores the application programs.

The touch panel 44 functions as an input device and a display device of the electronic apparatus 40. Icons for starting the application programs are displayed on the touch panel 44.

The camera unit 45 has resolution capable of photographing a barcode attached to a commodity and indicating information concerning the commodity. The wireless unit 46 performs transmission and reception of data between the wireless unit 46 and the access point 50 using wireless communication. As the electronic apparatus 40, portable information processing apparatuses such as a smartphone, a cellular phone, and a tablet terminal can be used in the store system 1 if the portable information processing apparatuses incorporate the camera unit 45 and the wireless unit 46.

The electronic apparatus 40 is installed with a commodity registration program P1 and operates as an information terminal corresponding to the store system 1 according to a function realized by the commodity registration program P1.

The commodity registration program P1 controls the processor 41 such that the electronic apparatus 40 becomes a terminal that registers commodity information according to operation by a customer.The commodity registration program P1 is saved in the auxiliary storage device 43. A region for storing, for example, information concerning commodities is provided in the auxiliary storage device 43 together with the commodity registration program P1. The commodity registration program P1 receives, from the store server 10, a member ID issued by performing member registration (registration of member information) in the store server 10 and manages (stores) the member ID. If a commodity code is detected by commodity scanning by operation of the customer, based on the commodity registration program P1, the processor 41 registers commodity information corresponding to the commodity code, which causes the auxiliary storage device 43 (or the main memory 42) to store the commodity information as information concerning a purchase target commodity.

Data stored in the auxiliary storage device 13 of the store system 1 is explained.

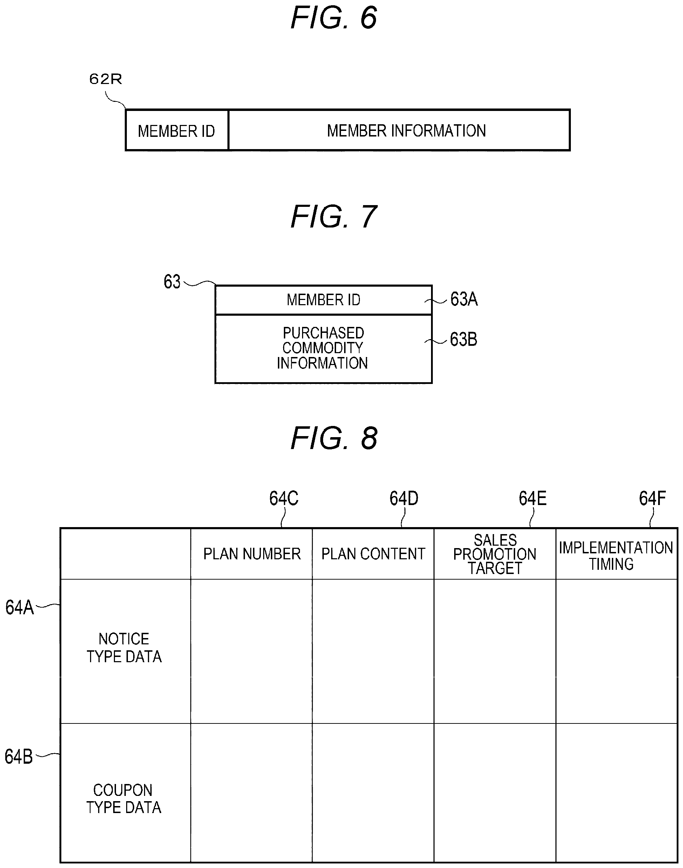

FIG. 6 is a schematic diagram illustrating a main data structure of a member data record 62R registered in the member database 62 of the store server 10. FIG. 6 illustrates data corresponding to one member. As illustrated in FIG. 6, in the member data record 62R, member information provided from the member is registered in association with a member ID peculiar to a customer registered as the member. The member information includes biological information and personal information as information for specifying or authenticating a member (a customer). As the biological information, data indicating characteristics such as a face image, a fingerprint, voice, an iris, and a vein pattern can be used. The personal information includes data indicating, for example, a name, an address, a telephone number, a settlement method (for example, cash, an electronic money, or a credit card), sex, a date of birth, and an occupation. The personal information includes not only data provided from a customer during member registration but also an analysis flag or the like indicating, for example, a rank determined based on a purchase history of the customer and a purchase orientation (preference) of commodities analyzed based on the purchase history. The rank and the analysis flag are generated based on information of commodities purchased in the past stored for each customer (member) and additionally registered in the member database 62.

FIG. 7 is a diagram illustrating a data structure in the transaction detail data 63 of the store server 10. The transaction detail data 63 includes commodity information registered by commodity scanning (input of a commodity code) by a customer. For example, the transaction detail data 63 includes a member ID 63A and purchased commodity information 63B including commodity information of each commodity. The member ID 63A is a member ID of a customer authenticated when coming to the store. The purchased commodity information 63B is information concerning a commodity purchased by the customer identified by the member ID. As the purchased commodity information 63B, a commodity ID, a commodity name, a price, and the like corresponding to a detected commodity code are read out from the commodity database 61 and registered. The transaction detail data 63 is generated based on commodity registration data (including a commodity ID) received from the electronic apparatus 40. If commodity information is registered in the electronic apparatus 40, the transaction detail data 63 is received from the electronic apparatus 40. FIG. 8 is a diagram illustrating a data structure in the sales promotion management data 64 in this embodiment. The sales promotion management data 64 is data in which information (sales promotion plans) for sales promotion to a checked-in customer (a shopping customer) is defined.

The information (sales promotion plans) for sales promotion includes a notice type data 64A and a coupon type data 64B. The notice type data 64A includes sales promotion plan data for providing various kinds of information related to commodities to customers. For example, the notice type data 64A is data indicating introduction to recipes for using commodities, guidance of a time service, and guidance of commodities sold at discounts. In the coupon type data 64B, sales promotion plan data for imparting a privilege capable of reducing a purchase price of a commodity is defined. A privilege imparted in a sales promotion plan in this embodiment can be presented to a customer during shopping in one transaction by the checked-in customer and applied to commodities registered as purchase targets.

The notice type data 64A and the coupon type data 64B respectively include a plurality of sales promotion plan data associated with peculiar plan numbers 64C. The sales promotion plan data included in the notice type data 64A and the coupon type data 64B respectively include a plan content 64D, a sales promotion target 64E, and an implementation timing 64F.

In the case of the notice type data 64A, image data including various kinds of information provided to customers is stored in the plan content 64D. In the case of information related to a commodity, image data is stored in association with a commodity ID. In the case of information unrelated to a specific commodity, only image data may be stored.

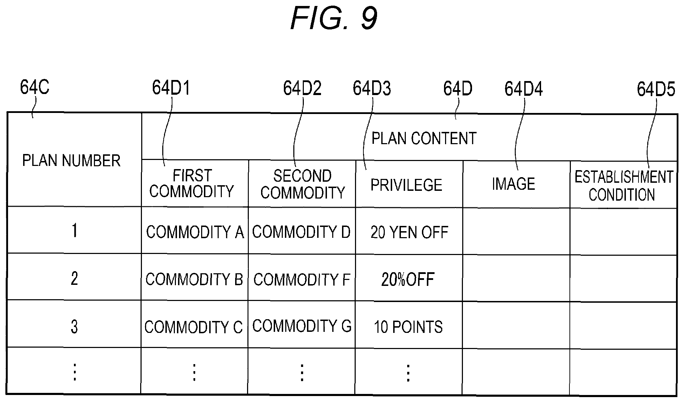

In the case of the coupon type data 64B, a plurality of kinds of coupons or points are set in the plan content 64D as privilege data capable of reducing a purchase price of a commodity. Details of the plan content 64D of the coupon type data 64B are explained below (see FIG. 9).

The sales promotion target 64E is data for specifying customers set as sales promotion targets. Data indicating, for example, sex, an age, a rank, and an analysis flag in the personal information stored for each member in the member database 62 is stored in the sales promotion target 64E. Concerning each of the sales promotion plan data, a group of members (customers) corresponding to the data stored in the sales promotion target 64E is created. Customers set as sales promotion targets are determined.

The implementation timing 64F is data indicating timing for applying a sales promotion plan. As the timing for applying the sales promotion plan (implementing sales promotion), there are, for example, store entry time sales promotion to be executed at a store entry (check-in) time of a customer and scanning time sales promotion performed during reading execution of a commodity code. The implementation timing 64F may be stored to communicate sales promotion at other specific timing. The other specific timing is, for example, a check-out time and a time of inquiry from a customer.

FIG. 9 is a diagram illustrating a data structure of the coupon type data 64B illustrated in FIG. 8.

A commodity ID of a first commodity 64D1 and a commodity ID of a second commodity 64D2 are stored in association with each other in the plan content 64D of the coupon type data 64B in association with a plan number peculiar to a sales promotion plan. Privilege data 64D3 indicating content of a privilege (a coupon or a point), image data 64D4 including information indicating content of the privilege to be presented to a customer, and establishment condition data 64D5 indicating conditions for validating that the privilege are stored with respect to a combination of the first commodity and the second commodity.

The second commodity 64D2 indicates a commodity to which the privilege indicated by the privilege data is applied. The first commodity 64D1 indicates a commodity used for satisfaction determination of conditions for applying the privilege to the second commodity 64D2.

The privilege data 64D3 is set in a sales promotion plan to which the privilege is imparted. The privilege data 64D3 is data indicating content of the privilege applied to the second commodity if the establishment conditions indicated by the establishment condition data 64D5 are satisfied. The privilege data 64D3 includes imparting of, for example, a price off coupon, a discount coupon, a price change coupon, and a point. A price of a commodity can be reduced by applying the price off coupon (for example, 20 yen off). An original sales price of the commodity can be discounted according to a set discount rate (for example, 20%) by applying the discount coupon. The original sales price of the commodity can be changed to another price (usually, a price lower than the original sales price) by applying the price change coupon. The original sales price of the commodity can be reduced according to the number of points by applying the point. More points may be added without changing the original sales price of the commodity.

In the case of sales promotion plan data with a plan number 1 illustrated in FIG. 9, a commodity A is defined as the first commodity and a commodity D is defined as the second commodity. For example, if the commodity A is subjected to commodity scanning in the electronic apparatus 40, privilege content is presented based on image data stored in association with a set of the commodity A and the commodity D. That is, information for sales promotion concerning the commodity D set as a sales promotion target is presented to a customer through the electronic apparatus 40 according to the commodity scanning of the commodity A. Thereafter, if the commodity D is subjected to the commodity scanning in the electronic apparatus 40 and commodity information is registered as a purchase target, a privilege (a discount, a price off, or the like) corresponding to privilege data is applied to the commodity D, a change or the like of a sales price is executed, and commodity information is registered.

The presentation of the privilege content using the image data 64D4 is executed in, for example, the electronic apparatus 40 if the first commodity is subjected to the commodity scanning. The presentation of the privilege content may be performed during the commodity scanning of the second commodity or during registration of commodity information of the second commodity.

For example, establishment conditions explained below are defined in the establishment condition data 64D5.

A first establishment condition is satisfied if commodity information of the first commodity is registered first and thereafter commodity information of the second commodity is registered. In the first establishment condition, after the commodity information of the first commodity and the second commodity is registered, if the registration of the first commodity is cancelled, deleted, or otherwise removed, the commodity information to which the privilege of the second commodity is applied is invalidated and changed to commodity information (an original sales price) to which the privilege is not applied.

In a second establishment condition, as in the first establishment condition, if the commodity information of the first commodity and the second commodity is registered but the registration of the commodity information of the first commodity is cancelled, deleted, or otherwise removed, the commodity information to which the privilege of the second commodity is applied is kept valid and is not changed. In the second establishment condition, the commodity information of the first commodity is validated even if only the commodity scanning is performed concerning the first commodity (provision of the privilege content is implemented) and the commodity information of the first commodity is not registered.

A third establishment condition is satisfied if the commodity information is registered concerning the second commodity before the commodity information of the first commodity is registered. In the third establishment condition, if the commodity information of the first commodity is registered, if the registration of the commodity information of the first commodity is cancelled, deleted, or otherwise removed, the commodity information to which the privilege of the second commodity is applied is invalidated and changed to the commodity information (the original sales price) to which the privilege is not applied.

Like the third establishment condition, a fourth establishment condition is satisfied if the commodity information concerning the second commodity is registered before the commodity information of the first commodity is registered. However, if the registration of the first commodity is cancelled, deleted, or otherwise removed, the commodity information to which the privilege of the second commodity is applied is kept valid and is not changed. In the fourth establishment condition, the commodity information of the first commodity is validated even if only the commodity scanning is performed concerning the first commodity (provision of the privilege content is implemented) and the commodity information of the first commodity is not registered.

Concerning the establishment conditions, establishment conditions other than the first to fourth establishment conditions can also be set.

In the sales promotion plan data illustrated in FIG. 9, one second commodity is associated with one first commodity. However, a plurality of second commodities may be set with respect to one first commodity. For example, if commodity information of one first commodity is registered, a privilege is applied to each of a plurality of second commodities set with respect to the first commodity and the commodity information is registered. In this case, a commodity of a different type can be set as the second commodity. Privilege data applied to each of the plurality of second commodities may have the same content common to the plurality of second commodities or may have contents different from one another.

Further, one second commodity or a plurality of second commodities may be set with respect to a set of a plurality of first commodities. In this case, for example, if commodity information of the plurality of first commodities is registered, a privilege is applied to the one second commodity or each of the plurality of second commodities set with respect to the set of the first commodities and commodity information is registered.

In the following explanation, to facilitate explanation, as illustrated in FIG. 9, for example, one second commodity is associated with one first commodity.

The operation of the store system 1 in this embodiment is explained. First, operation for registering, using the electronic apparatus 40, according to operation by a customer himself or herself, commodity information of commodities to be purchased is explained.

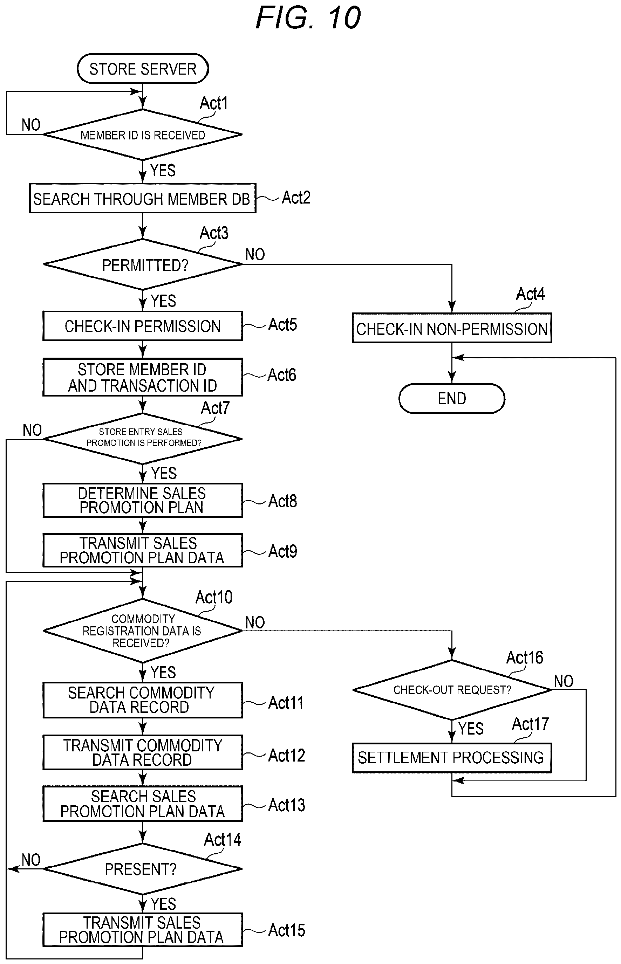

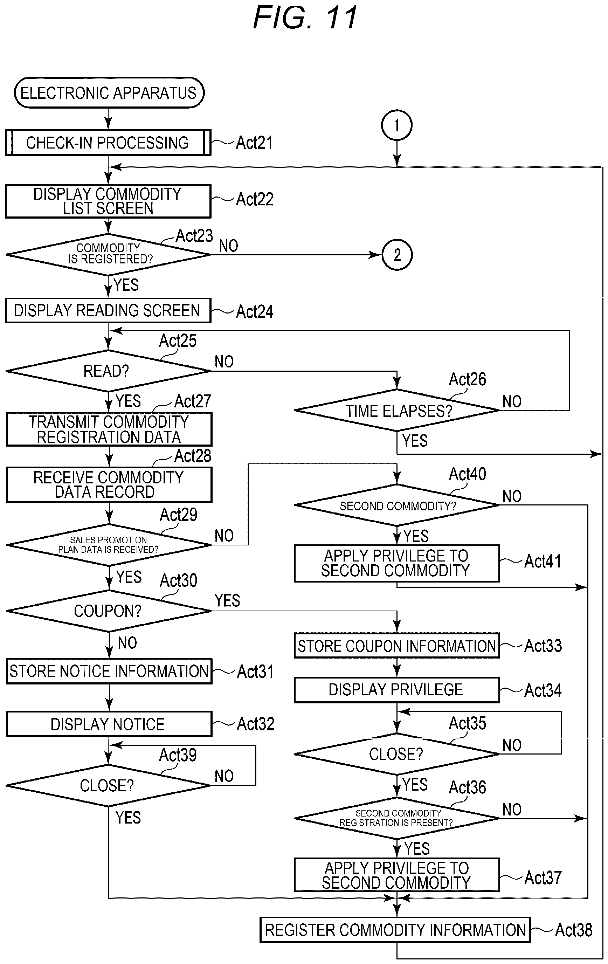

FIG. 10 is a flowchart for explaining the operation of the store server 10 (the processor 11) in this embodiment. FIGS. 11, 12, and 13 are flowcharts illustrating the operation of the electronic apparatus 40 (the processor 41) in this embodiment. The operation illustrated in FIGS. 10 to 13 is an example. A processing procedure and processing content of the operation are not particularly limited if the same result can be obtained.

First, if a customer comes to the store, the customer operates the electronic apparatus 40 to start the commodity registration program P1 and starts commodity registration processing. If the commodity registration processing is started, the processor 41 executes check-in processing based on the commodity registration program P1 (Act 21 in FIG. 11).

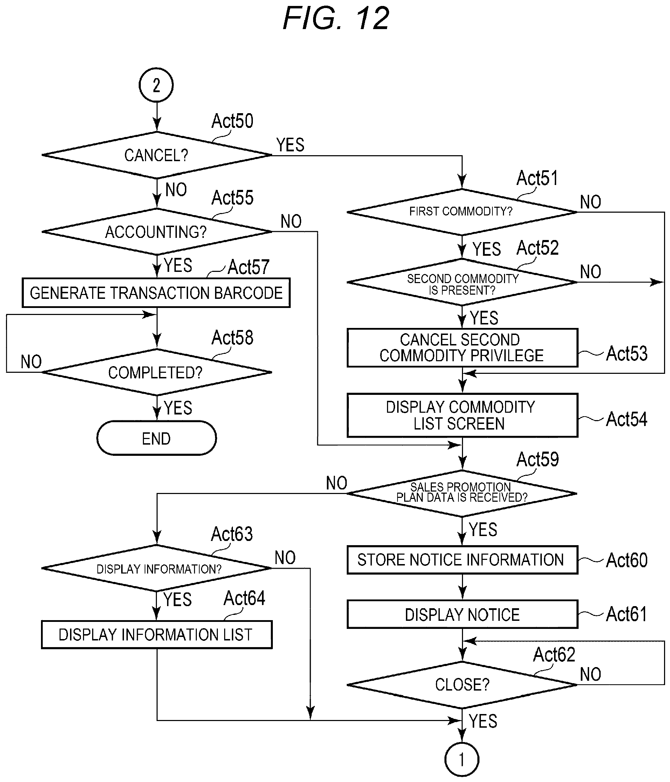

FIG. 12 is a flowchart for explaining check-in processing executed by the electronic apparatus 40 in this embodiment. The check-in processing specifies a customer using the electronic apparatus 40.

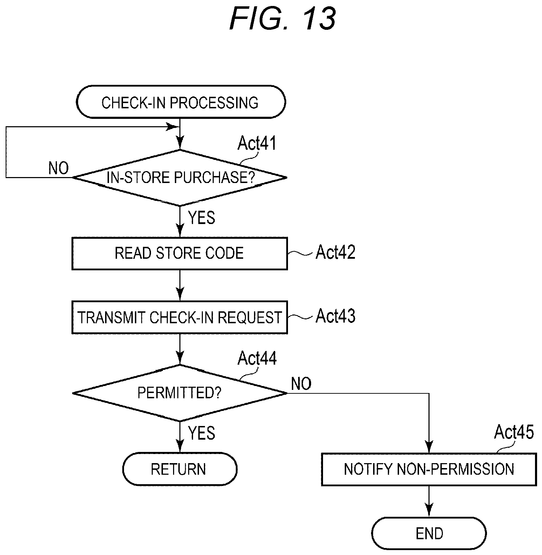

If in-store purchase is instructed by operation on the touch panel 44 by the customer (YES in Act 41 in FIG. 13), the processor 41 starts the camera unit 45 and shifts to a reading state of a store code.

The check-in terminal 30 causes the touch panel 35 to display a store code peculiar to the store, for example, a two-dimensional code pattern. The customer operates the electronic apparatus 40 to read, with the camera unit 45 of the electronic apparatus 40, the store code displayed on the check-in terminal 30.

If the store code is read (Act 42), the processor 41 transmits a check-in request to the store server 10 together with a member ID stored in advance in the electronic apparatus
40 and a date and time (year, month, day, and time) when the store code is read (Act 43).

The store server 10 receives the check-in request from the electronic apparatus 40 through the access point 50. If receiving the member ID together with the check-in request (YES in Act 1), the processor 11 of the store server 10 describes the member ID in the work area of the main memory 12. The processor 11 searches through the member database 62 using the member ID as a key for search and determines presence or absence of the member data record 62R in which the member ID is described (Act 2).

If confirming that the pertinent member data record 62R is absent (NO in Act 3), the processor 11 transmits a notification of check-in non-permission to the electronic apparatus 40 (Act 4 in FIG. 10). If receiving the notification of the check-in non-permission from the store server 10 (NO in Act 44 in FIG. 13), the processor 41 of the electronic apparatus 40 outputs a non-permission notification for notifying that the check-in is not permitted (Act 45). For example, the processor 41 causes the touch panel 44 to display a message indicating that the check-in is not permitted. In this case, the electronic apparatus 40 ends the commodity registration processing.

On the other hand, if the member ID received together with the check-in request is present in the member data record 62R (YES in Act 3), the processor 11 transmits a notification of check-in permission to the electronic apparatus 40 (Act 5). The processor 11 generates a member ID of the customer permitted to check in and a transaction ID for identifying one transaction by the customer and causes the auxiliary storage device 13 to store the member ID and the transaction ID (Act 6).

In the check-in processing, the processor 11 may cause the electronic apparatus 40 to display a code (for example, a two-dimensional code) including the member ID and cause the camera 36 of the check-in terminal 30 to read the code. In this case, the processor 31 of the check-in terminal 30 transmits a check-in request including the member ID to the store server 10. The processor 11 of the store server 10 searches through the member database 62 based on the member ID and determines check-in permission as explained above. Further, the check-in terminal 30 may input data of biological information (for example, a face image) of the customer who comes to the store, collate the data with biological information registered in advance in the store server 10, and specify a member.

Subsequently, the processor 11 of the store server 10 detects whether sales promotion plan data for the store entry time sales promotion, which should be provided to the member permitted to check in, is set in the sales promotion management data 64 (Act 7).

For example, the processor 11 acquires, concerning the member (the member ID) permittedto check in, personal information (sex, an age, a rank, an analysis graph, and the like) registered in the member database 62 and detects whether the personal information corresponds to a group
created according to the sales promotion
plan (whether data corresponding to the sales promotion target 64E of the sales promotion management data 64 is set). If the member permitted to check in belongs to some group, sales promotion plan data that should be provided to the member permitted to check in is present. The processor 11 detects the pertinent sales promotion plan data (Act 8) and transmits the sales promotion plan data to the electronic apparatus 40 (Act 9).

Basically, in the store entry sales promotion, the sales promotion management data 64 is set such that the sales promotion plan data set in the notice type data 64A is provided. That is, information effective for sales promotion is provided to a customer who is about to do shopping in the store.

If receiving the check-in permission notification from the store server 10 (YES in Act 44 in FIG. 13), the processor 41 of the electronic apparatus 40 comes into a state in which the processor 41 is capable of registering commodity information (storing commodity information set as a purchase target) according to operation by the customer. If receiving the check-in permission notification, the processor 41 causes the touch panel 44 to display a commodity list screen and comes into a standby state for input operation by the customer (Act 22 in FIG. 11).

If receiving the sales promotion plan data immediately after receiving the check-in permission notification (YES in Act 59 in FIG. 12), the processor 41 causes the main memory 42 or the auxiliary storage device 43 to store the sales promotion plan data (Act 60). The processor 41 causes, based on the image data included in the sales promotion plan data received from the store server 10, the touch panel 44 to display an image (notice information) for sales promotion (Act 61).

In this way, the electronic apparatus 40 can receive, during the store entry, the sales promotion plan data effective for sales promotion to the customer from the store server 10 and present the notice information to the customer through the touch panel 44.

If a display end of the image (the notice information) for the store entry time sales promotion is instructed (YES in Act 62), the processor 41 causes the touch panel 35 to display a message for notifying that the processor 41 shifts to an operation state in which commodity registration is possible by the electronic apparatus 40. For example, the processor 41 causes the touch panel 35 to display a message "You have succeeded in check-in. Please begin shopping". The electronic apparatus 40 may output the message by voice.

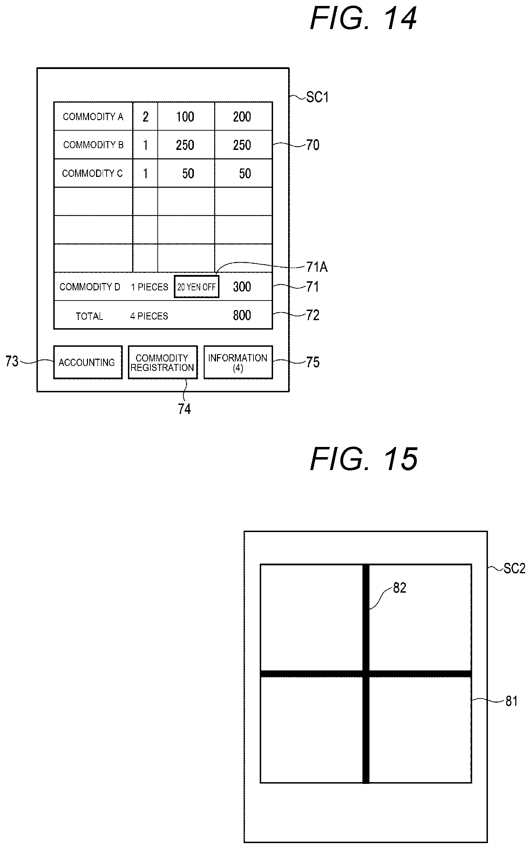

The processor 41 of the electronic apparatus 40 causes the touch panel 44 to display, for example, a commodity list screen SC1 illustrated in FIG. 14. The commodity list screen SC1 illustrated in FIG. 14 shows an example of a state in which several commodities are already registered. Commodity information is not displayed in an initial state.

On the commodity list screen SC1 illustrated in FIG. 14, a registered commodity list region 70, a registration target commodity region 71, a total display region 72, an accounting button 73, a commodity registration button 74, an information display button 75, and the like are provided. The registered commodity list region 70 is a region for displaying a list of a commodity name, the number of pieces, a unit price, and an amount concerning a registered commodity. The registered target commodity region 71 is a region for displaying a commodity name, the number of pieces, and a total amount of a commodity registered last. In the registration target commodity region 71, if a privilege is applied based on sales promotion plan data (privilege information) provided from the store server 10, information indicating privilege content is added. For example, in the example illustrated in FIG. 14, concerning the "commodity D", privilege indication 71A indicating that a price off coupon is applied and "20 yen is off" is displayed. Although not illustrated, if a privilege is applied to a commodity already displayed in the registered commodity list region 70 according to registration of a commodity displayed in the registration target commodity region 71, privilege indication is added to the commodity displayed in the registered commodity list region 70. The total display region 72 is a region for displaying the number and a total amount of registered commodities.

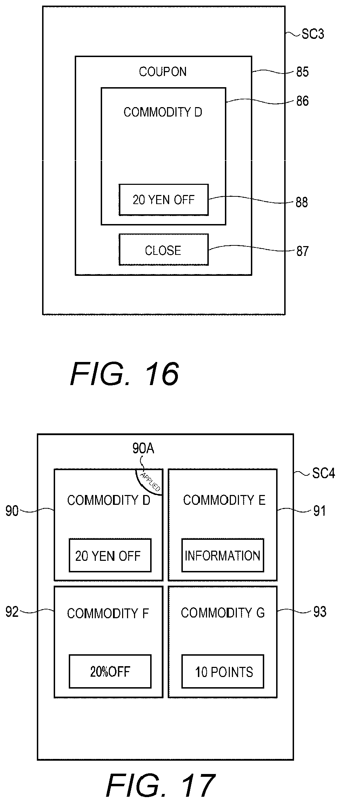

The accounting button 73 is a button for notifying the store server 10 that the electronic apparatus 40 ends the commodity registration and shifts to accounting processing. The commodity registration button 74 is a button for instructing a shift to a commodity registration mode. The information display button 75 is a button for instructing display of sales promotion plan data (sales promotion content) already received from the store server 10. A number indicating the number of kinds of received information is displayed on the information display button 75. In the example illustrated in FIG. 14, "(4)" indicating that four sales promotion plan data are already received is displayed on the information display button 75. If the display of the sales promotion plan data (the sales promotion content) is instructed by the information display button 75, for example, an information list screen SC4 illustrated in FIG. 17 is displayed (details are explained below).

The commodity list screen SC1 shows only a basic form for displaying various kinds of information concerning a registered commodity. It is possible to display various kinds of information related to commodity registration other than the information illustrated in FIG. 14.

If operation on the commodity registration button 74 is detected on the touch panel 44 (YES in Act 23), the processor 41 starts the camera unit 45 and causes the touch panel 44 to display, instead of the commodity list screen SC1, a commodity code reading screen for reading commodity information (Act 24).

FIG. 15 is a diagram illustrating an example of a commodity code reading screen SC2. An image display region 81 is provided on the commodity code reading screen SC2. The image display region 81 is a region where an image photographed by the camera unit 45 is displayed. A line 82 indicating a reading position of a barcode (a commodity code) attached to a commodity is displayed in the image display region 81.

For example, a message "please hold up a barcode" is displayed on the commodity code reading screen SC2. Consequently, the customer can easily grasp registration operation for commodity information performed using the commodity code reading screen SC2.

If the customer finds, in a selling floor, a commodity that the customer purchases, the customer photographs, with the camera unit 45 of the electronic apparatus 40, a commodity code symbol such as a barcode attached to the commodity. An image photographed by the camera unit 45 is displayed in the image display region 81. The customer adjusts a display range such that the commodity code symbol (the barcode) is displayed in the position of the line 82.

The processor 41 of the electronic apparatus 40 extracts the code symbol from the image photographed by the camera unit 45 and reads, for example, a commodity ID (a commodity code) peculiar to the commodity indicated by the code symbol. That is, the processor 41 detects the commodity ID (the commodity code) of the commodity according to commodity scanning (detecting means). If the commodity ID is read from the image photographed by the camera unit 45 (YES in Act 25), the processor 41 transmits commodity registration data including the commodity ID and the member ID used in the check-in request to the store server 10 (Act 27).

If a code symbol cannot be extracted from the image for a fixed time (NO on Act 25 and then YES in Act 26), the processor 41 changes the display from the commodity code reading screen SC2 to the commodity list screen SC1 (Act 22).

If receiving the commodity registration data from the electronic apparatus 40 (YES in Act 10 in FIG. 10), the processor 11 of the store server 10 searches through the commodity database 61 using the commodity ID as a key for search (Act 11). The processor 11 acquires a commodity data record corresponding to the commodity ID from the commodity database 61. The commodity data record includes a commodity ID, a commodity name, and a prices. The processor 11 transmits the commodity data record to the electronic apparatus 40 (Act 12).

The processor 11 searches a commodity ID set in the plan content 64D of the sales promotion management data 64 using the commodity ID included in the commodity registration data as a key for search (Act 13). That is, the processor 11 searches, concerning the notice type data 64A, a commodity ID corresponding to the key for search from a commodity ID set in association with image data in the plan content 64D. The processor 11 searches, concerning the coupon type data 64B, a commodity ID corresponding to the key for search from a first commodity set as the first commodity 64D1.

If the commodity ID of the commodity subjected to the commodity scanning is not set in the plan content 64D of the sales promotion management data 64 (NO in Act 14), the processor 11 returns to the reception waiting state for commodity registration data from the electronic apparatus 40.

On the other hand, if the commodity ID of the commodity subjected to the commodity scanning is set in the plan content 64D of the notice type data 64A (YES in Act 14), the processor 11 transmits the relevant sales promotion plan data to the electronic apparatus 40 (Act 15).

If the commodity ID of the commodity subjected to the commodity scanning is set as a first commodity of the coupon type data 64B (YES in Act 14), the processor 11 transmits the relevant sales promotion plan data to the electronic apparatus 40 (Act 15). The sales promotion plan data includes, as illustrated in FIG. 9, data set in the first commodity 64D1, the second commodity 64D2, the privilege data 64D3, the image data 64D4, and the establishment condition data 64D5.

After transmitting the sales promotion plan data, the processor 11 returns to the reception waiting state for commodity registration data from the electronic apparatus 40.

After receiving the commodity data record from the store server 10 (Act 28 in FIG. 11), if sales promotion plan data is not received (NO in Act 29), the processor 41 of the electronic apparatus 40 determines whether the commodity ID of the commodity subjected to the commodity scanning corresponds to a second commodity set in the sales promotion plan data already received. That is, the processor 41 detects the commodity ID of the commodity subjected to the commodity scanning from the second commodity of the sales promotion plan data stored in the auxiliary storage device 43.

If the commodity ID is not detected from the sales promotion plan data, that is, the commodity subjected to the commodity scanning does not correspond to the second commodity (NO in Act 40), the processor 41 generates, based on the commodity data record received from the store server 10, commodity information concerning the commodity subjected to the commodity scanning and causes the auxiliary storage device 43 to store the commodity information. That is, since the commodity subjected to the commodity scanning is a general commodity unrelated to the sales promotion plan data set in the sales promotion management data 64 in the store server 10, the processor 41 executes normal commodity registration (Act 38). The processor 41 causes the touch panel 44 to display the commodity list screen to which a commodity set as a purchase target is added by the commodity scanning and comes into a standby state for input operation (Act 22).

On the other hand, after receiving the commodity data record from the store server 10 (Act 28 in FIG. 11), if the sales promotion plan data is received (YES in Act 29), the processor 41 of the electronic apparatus 40 determines whether the sales promotion plan data is data of notice information set in the notice type data 64A. If the sales promotion plan data is the sales promotion plan data set in the notice type data 64A (NO in Act 30), the processor 41 causes the main memory
42 or the auxiliary storage device 43 to store the sales promotion plan data (Act 31). The processor 41 causes the touch panel 44 to display the notice information based on the image data included in the sales promotion plan data (Act 32).

For example, a "close" button for ending display is provided in the notice information displayed on the touch panel 44 (see FIG. 16). If a display end of the notice information is instructed by operation of the "close" button, the processor 41 generates commodity information of the commodity subjected to the commodity scanning and causes the auxiliary storage device 43 to store the commodity information. That is, the processor 41 executes normal commodity registration (Act 38), causes the touch panel 44 to display the commodity list screen to which the commodity is added, and comes into a standby state for input operation (Act 22).

In the following explanation, the commodity related to the sales promotion plan data set in the sales promotion management data 64 is subjected to the commodity scanning. Examples of the commodity scanning respectively corresponding to the first to fourth establishment conditions set in the establishment condition data 64D5 of the coupon type data 64B illustrated in FIG. 9 are explained.

First, an example of the commodity scanning performed when the first establishment condition is satisfied is explained. The first establishment condition is satisfied if the commodity information of the first commodity is registered first (the commodity information is stored in a storage medium as a purchase target) and thereafter the commodity information of the second commodity is registered (the commodity information is stored in the storage medium as a purchase target).

The processor 41 transmits the commodity registration data of the commodity corresponding to the first commodity to the store server 10 according to the commodity scanning (Act 27). As a result, the processor 41 receives the sales promotion plan data set in the coupon type data 64B from the store server 10 (YES in Act 30). The processor 41 causes the main memory 42 or the auxiliary storage device 43 to store the sales promotion plan data (Act 33). The processor 41 causes, based on the image data included in the sales promotion plan data, the touch panel 44 to display privilege information (Act 34).

FIG. 16 is a diagram illustrating an example of a privilege information display screen SC3. A privilege information region 85 is provided on the privilege information display screen SC3. A "close" button 87 same as the "close" button in the privilege content region 86 is provided on the inside of the privilege information region 85. The privilege content region 86 is displayed based on the image data included in the sales promotion plan data and includes information indicating content of a privilege. In the example illustrated in FIG. 16, a price off coupon of "20 yen off" is set as a privilege for the "commodity D". The "close" button 87 is a button for ending display of the privilege information display screen SC3.

For example, in the sales promotion plan data of the plan number 1 illustrated in FIG. 9, the "commodity A" is set as the first commodity, the "commodity D" is set as the second commodity, and the "price off coupon" is set as the privilege data. Therefore, by performing the commodity scanning for the "commodity A", as illustrated in FIG. 16, privilege information of the "price off coupon" applied to the "commodity D" is displayed. Consequently, it is possible to improve buying intension for the "commodity D" of the customer and perform sales promotion for the "commodity D".

If a display end of the privilege information is instructed by operation of the "close" button 87 (YES in Act 35), the processor 41 generates commodity information of the commodity subjected to the commodity scanning and causes the auxiliary storage device 43 to store the commodity information. Since the commodity information of the second commodity is registered after the registration of the first commodity in the first establishment condition, the processor 41 determines in Act 36 that the second commodity is not registered (NO in Act 36). The processor 41 executes the normal commodity registration for a commodity corresponding to the first commodity (Act 38), causes the touch panel 44 to display the commodity list screen to which the commodity is added, and comes into the standby state for input operation (Act 22).

An example of the commodity scanning performed for the second commodity corresponding to the first commodity, the commodity information of which is registered, after the commodity information of the first commodity is registered is explained. In this case, the processor 41 searches, based on a commodity ID of the commodity subjected to the commodity scanning, the second commodity of the sales promotion plan data already received. As a result if a commodity ID corresponding to the second commodity is searched (YES in Act 40), the processor 41 applies a privilege indicated by privilege data set in the pertinent sales promotion plan data to the commodity (Act 41) and registers the commodity information (Act 38). That is, the first establishment condition is satisfied because, after the commodity information of the first commodity is registered first, the second commodity is subjected to the commodity scanning. In this case, the processor 41 applies the privilege to the second commodity and causes the auxiliary storage device 43 to store the commodity information of the second commodity.

For example, in the case of the sales promotion plan data of the plan number 1 illustrated in FIG. 9, if the commodity information of the "commodity A" is registered first, according to the commodity scanning of the "commodity D", the processor 41 applies the privilege of the price off "20 yen", reduces the original prices of the "commodity D", and causes the auxiliary storage device 43 to store the commodity information of the "commodity D".

Concerning the second commodity registered based on the first establishment condition, if the registration of the first commodity is cancelled, the processor 41 invalidates the commodity information to which the privilege of the second commodity is applied. That is, if a registered commodity displayed on the commodity list screen SC1 is selected by operation by a user and cancellation (deletion of stored commodity information) is designated by predetermined operation (YES in Act 50 in FIG. 12), the processor 41 determines, by searching the first commodity of the received sales promotion plan data, whether a cancellation target commodity is set as the first commodity.

If the cancellation target commodity does not correspond to the first commodity (NO in Act 51), the processor 41 deletes commodity information of the commodity selected as the cancellation target from the auxiliary storage device 43 and causes the touch panel 44 to display the commodity list screen SC1 from which the cancellation target commodity is deleted (Act 54).

If the cancellation target commodity is searched from the received sales promotion plan data as the first commodity (YES in Act 51), the processor 41 determines whether the commodity information of the second commodity corresponding to the first commodity is already registered. If the commodity information of the second commodity is already registered (YES in Act 52), the processor 41 invalidates commodity information of a registered commodity corresponding to the second commodity (cancellation of the privilege) and changes the commodity information to commodity information (an original sales price) to which the privilege is not applied (Act 53). That is, the processor 41 deletes the commodity information of the commodity corresponding to the second commodity registered in the auxiliary storage device 43 and causes the auxiliary storage device 43 to store commodity information of a commodity corresponding to the second commodity to which the privilege is not applied. The processor 41 causes, concerning the commodity corresponding to the second commodity, the touch panel 44 to display the commodity list screen SC1 in which, for example, the original sales price before the privilege is applied is changed (Act 54).

An example of the commodity scanning performed when the second establishment condition is satisfied is explained. As in the first establishment condition, in the second establishment condition, the commodity information of the first commodity and the second commodity is registered. However, if a registration of the commodity information of the first commodity is cancelled, the commodity information to which the privilege of the second commodity is applied is kept valid and is not changed. Processing different from the processing performed if the first establishment condition is satisfied is explained.

If a registered commodity displayed on the commodity list screen SC1 is selected and cancellation (deletion of stored commodity information) is designated by predetermined operation (YES in Act 50 in FIG. 12), the processor 41 determines, by searching the first commodity of the received sales promotion plan data, whether a cancellation target commodity is set as the first commodity.

If the sales promotion plan data in which the cancellation target commodity is set as the first commodity is determined and the second establishment condition is set as an establishment condition for the relevant sales promotion plan data, the processor 41 determines that a privilege is not invalidated for a commodity corresponding to the second commodity (NO in Act 51). Thereafter, the processor 41 executes the same processing as the processing explained above. In this case, as in the case of the first establishment condition, the processor 41 deletes commodity information of the cancellation target commodity (the first commodity) from the auxiliary storage device 43 and does not change the commodity information of the second commodity even if the commodity information of the second commodity corresponding to the deleted commodity (the first commodity) is already stored. The processor 41 causes the touch panel 44 to display the commodity list screen SC1 from which the cancellation target commodity is deleted (Act 54).

In the second establishment condition, the commodity information of the first commodity is validated even if only the commodity scanning is performed for the first commodity and the commodity information of the first commodity is not registered.
In this case, although the electronic apparatus 40 detects a commodity code according to the commodity scanning, the electronic apparatus 40 can cause the auxiliary storage device 43 not to store, as a purchase target, commodity information corresponding to the detected commodity code. For example, besides the "close" button 87, a stop button (not illustrated) for instructing a registration stop of commodity registration for a commodity subjected to the commodity scanning is provided on the privilege information display screen SC3 illustrated in FIG. 16.

According to operation on the stop button of the privilege information display screen SC3, the processor 41 does not cause the auxiliary storage device 43 to store commodity information if the registration stop for the commodity registration is instructed and causes the touch panel 44 to display, instead of the display of the privilege information display screen SC3, the commodity list screen SC1 to which the commodity subjected to the commodity scanning is not added (Act 22). At this time, if the commodity subjected to the commodity scanning corresponds to the first commodity, the electronic apparatus 40 receives the sales promotion plan data from the store server 10. That is, by performing the commodity scanning, the electronic apparatus 40 can acquire, without registering commodity information, privilege information of a commodity set as the second commodity with respect to the commodity (the first commodity) subjected to the commodity scanning and cause the auxiliary storage device 43 to store the privilege information. Therefore, the customer can perform the commodity scanning for the purpose of acquiring the privilege information. Consequently, the customer can collect various coupons and points for a plurality of commodities during shopping and continue the shopping. The store can efficiently provide privilege information suitable for respective customer.

Therefore, in the commodity scanning performed when the second establishment condition is satisfied, regardless of if the processor 41 causes, concerning the commodity corresponding to the first commodity, the auxiliary storage device 43 to store commodity information as a purchase target or if the processor 41 only detects a commodity code to acquire privilege information (sales promotion plan data) from the store server 10 and does not cause the auxiliary storage device 43 to store commodity information, by performing the commodity scanning of the commodity corresponding to the second commodity thereafter, it is possible to register commodity information to which a privilege is applied concerning the commodity corresponding to the second commodity.

An example of the commodity scanning performed when the third establishment condition is satisfied is explained. The third establishment condition is satisfied if commodity information is registered concerning the second commodity before commodity information of the first commodity is registered. In the third establishment condition, if the commodity information of the first commodity is registered, if the registration of the commodity information of the first commodity is cancelled (deletion of the stored commodity information), the commodity information to which the privilege of the second commodity is applied is invalidated and changed to commodity information (an original sales price) to which the privilege is not applied. Like the second satisfaction information explained above, the third establishment condition may be satisfied if, according to detection of a commodity code, commodity information is not stored in the auxiliary storage device 43 and privilege information is acquired.

Redundant explanation of the above explanation is omitted.

In the electronic apparatus 40, if the commodity scanning is performed concerning the commodity corresponding to the first commodity, sales promotion plan data (a coupon) of the coupon type data 64B is received from the store server 10. If the sales promotion plan data is received (YES in Act 30), the processor 41 stores the sales promotion plan data (Act 33) and causes the touch panel 44 to display the privilege information display screen SC3 (Act 34).

If a display end of the privilege information is instructed by operation of the "close" button 87 (YES in Act 35), the processor 41 determines, based on the sales promotion plan data, the second commodity corresponding to the commodity subjected to the commodity scanning. The processor 41 determines whether commodity information of a commodity corresponding to the second commodity is stored as a purchase target in the auxiliary storage device 43. If the commodity information of the commodity corresponding to the second commodity is stored (YES in Act 36), the processor 41 deletes the stored commodity information of the commodity corresponding to the second commodity and generates commodity information to which the privilege is applied (Act 37). The processor 41 causes the auxiliary storage device 43 to store the commodity information of the commodity (the first commodity) subjected to the commodity scanning and the changed commodity information of the commodity corresponding to the second commodity (Act 38).

In the case of the third establishment condition, if the stored commodity information of the commodity corresponding to the first commodity is cancelled (deleted), as in the case of the first establishment condition, the commodity information to which the privilege of the second commodity is applied is invalidated and changed to the commodity information (the original sales price) to which the privilege is not applied. Detailed explanation is omitted.

An example of the commodity scanning performed when the fourth establishment condition is satisfied is explained. Like the third establishment condition, the
fourth establishment condition is satisfied if commodity information is registered concerning the second commodity before the commodity information of the first commodity is registered. However, if the registration of the first commodity is cancelled (the stored commodity information is deleted), the commodity information to which the privilege of the second commodity is applied is kept valid and is not changed. In the fourth establishment condition, the commodity information of the first commodity is validated even if only the commodity scanning is performed concerning the first commodity and the commodity information of the first commodity is not registered.

Concerning satisfaction of the fourth establishment condition, as in the case of the third satisfaction information, detailed explanation is omitted assuming that commodity information of commodities respectively corresponding to the first commodity and the second commodity is registered. Concerning cancellation of the registered commodity corresponding to the first commodity, detailed explanation is omitted assuming that the cancellation is executed as in the case of the second satisfaction information.

In this way, in the store system 1 in this embodiment, the electronic apparatus 40 is capable of performing provision of the privilege information corresponding to the sales promotion plan data set in the sales promotion management data 64 and the registration of the commodity information to which the privilege is applied. The provision of the sales promotion plan data is executed according to a commodity subjected to the commodity scanning during shopping of the customer. Therefore, it is possible to provide, during the shopping, sales promotion plan data of sales promotion content suitable for each customer.

If the information display button 75 of the commodity list screen SC1 is operated during the shopping (YES in Act 63 in FIG. 12), the processor 41 of the electronic apparatus 40 causes, based on the sales promotion plan data (image data) received from the store server 10, the touch panel 44 to display the information list screen SC4 (Act 64).

FIG. 17 is a diagram illustrating an example of the information list screen SC4.

On the information list screen SC4 illustrated in FIG. 17 sales promotion information 90, 92, and 94 of the "commodity D", the "commodity F", and the "commodity G" set as the second commodity acquired by performing commodity registration concerning the "commodity A", the "commodity B", and the "commodity C" set as the first commodity set in the coupon type data 64B illustrated in FIG. 9 is displayed. Contents of privilege data (contents of coupons) are respectively displayed in the sales promotion information 90, 92, and 94.

A mark 90A indicating that a privilege is applied is added to the sales promotion information 90. That is, the mark 90A illustrated in FIG. 17 indicates that commodity information concerning the "commodity D", to which a privilege of "20 yen off is applied by performing the commodity scanning concerning the "commodity D", is registered. The sales promotion information 91 is based on sales promotion plan data of the notice type data 64A. Information concerning the commodity E is provided.

In this way, in the electronic apparatus 40, acquired privilege information is displayed according to the operation on the information display button 75 of the commodity list screen SC1. Therefore, the customer can confirm a privilege usable at any timing not only during privilege acquisition but also during shopping. Therefore, it is easy to purchase a commodity to which a privilege is applied. A sales promotion effect is improved.

The customer finishing the shopping in the sales floor touches the accounting button 73 on the commodity list screen SC1 displayed on the touch panel 44 and declares execution of accounting. If detecting that the accounting button 73 is touched (YES in Act 55 in FIG. 12), the processor 41 of the electronic apparatus 40 generates a transaction barcode indicating content of a transaction including a member ID (Act 57) and causes the touch panel 44 to display the transaction barcode. The customer moves to, while carrying the electronic apparatus 40, a setting place of the check-out terminal 60 that performs check-out processing. The customer causes a camera of the check-out terminal 60 to read the transaction barcode displayed on the touch panel 44. If the reading of the transaction barcode is completed (YES in Act 58), the processor 41 ends the commodity registration processing.

After reading the transaction barcode from the electronic apparatus 40, the check-out terminal 60 transmits a check-out request to the store server 10 together with data indicated by the transaction barcode.

Simultaneously with transmitting the transaction detail data to the store server 10, the electronic apparatus 40 may transmit the check-out request including the member ID to the store server 10 to request settlement processing.

If receiving the check-out request (YES in Act 16 in FIG. 10), the processor 11 of the store server 10 executes the settlement processing based on the transaction detail data concerning the customer corresponding to the member ID included in the check-out request using, for example, a settlement method registered by the member (a credit company or the like in the case of credit settlement or an electronic money medium if electronic money settlement is registered in advance). Consequently, the store server 10 ends processing for one transaction performed using the electronic apparatus 40.

In this way, the store system 1 according to this embodiment is capable of, during shopping in the store, providing information for sales promotion of commodities that can be used for the shopping.

In the above explanation, the electronic apparatus 40 determines, based on the sales promotion plan data received from the store server 10, application or nonapplication of a privilege to the second commodity and generates the transaction detail data. In the store system 1 in this embodiment, like the electronic apparatus 40, the store server 10 may generate the transaction detail data. If the commodity ID indicated by the commodity registration data received from the electronic apparatus 40 indicates the first commodity set in the sales promotion management data 64, the store server 10 transmits the sales promotion plan data to the electronic apparatus 40 and causes the electronic apparatus 40 to display the sales promotion information. Consequently, the same effects as the effects explained above are obtained.

In the above explanation, if the sales promotion plan data is not received in Act 29 (NO in Act 29), the processor
41 determines whether the commodity ID corresponds to the second commodity set in the received sales promotion plan data. However, the processor 41 may shift to the processing in Act
38 and Act 39.

In general, transfer of the store server 10 is performed in a state in which a program is stored in a recording medium such as a ROM or a HDD. However, not only this, but the store server 10 may be transferred in a state in which the program is not stored in the storage medium. In this case, the program transferred separately from the store server 10 is written in a writable storage device included in the store server 10 according to operation of the user or the like. The transfer of the program can be performed by being recorded in a removable recording medium or by communication via a network. A form of the recording medium may be any form if the recording medium can store the program like a CD-ROM, a memory card, or the like and is readable by an apparatus.

The several embodiments are explained above. However, the embodiments are presented as examples and are not intended to limit the scope of the invention. These new embodiments can be implemented in other various forms. Various omissions, substitutions, and changes can be made without departing from the scope of the invention. These embodiments and modifications of the embodiments are included in the scope and the gist of the invention and included in the inventions described in claims and the scope of equivalents of the inventions.

## Claims

1. An information processing apparatus comprising:
a controller configured to detect a commodity code of a commodity and determine, responsive to detecting a first commodity code of a first commodity, whether a second commodity s registered as associated with the first commodity;
an display device configured to output content of privilege data for the second commodity in response to determining that the second commodity is registered as associated with the first commodity; and
a storage device configured to apply, responsive to detecting a second commodity code of the second commodity, a privilege corresponding to the privilege data to the second commodity and store commodity information of the second commodity.

2. The apparatus according to claim 1, wherein the storage device is further configured to store commodity information of the first commodity in response to detecting the first commodity code of the first commodity, and apply the privilege and store the commodity information of the second commodity if the commodity information of the first commodity is stored.

3. The apparatus according to claim 2, wherein, if the stored commodity information of the first commodity is deleted, the storage device is further configured to change the commodity information of the second commodity to commodity information to which the privilege is not applied.

4. The apparatus according to claim 2, wherein, if the second commodity code of the second commodity is detected, the storage device is further configured to store the commodity information of the second commodity if the first commodity code is not detected earlier and, if the first commodity code of the first commodity is detected, the storage device is further configured to change the stored commodity information of the second commodity to commodity information to which the privilege is applied.

5. The apparatus according to any one of claims 1 to 4, wherein the controller is further configured to determine a plurality of the second commodities set in association with the first commodity.

6. A method, comprising:
detecting a commodity code of a commodity; determining, responsive to detecting a first commodity
code of a first commodity, whether a second commodity is registered as associated with the first commodity;
outputting content of privilege data set for the second commodity in response to determining that the second commodity is registered as associated with the first commodity; and
applying, responsive to detecting a second commodity code of the second commodity, a privilege corresponding to the privilege data to the second commodity and storing commodity information of the second commodity.

7. The method according to claim 6, further comprising: storing commodity information of the first commodity in
response to detecting the first commodity code of the first commodity; and applying the privilege and store the commodity information of the second commodity if the commodity information of the first commodity is stored.

8. The method according to claim 7, further comprising: detecting that stored commodity information of the first
commodity is deleted; and
changing the commodity information of the second commodity to commodity information to which the privilege is not applied.

9. The method according to claim 7, further comprising: in response to detecting the second commodity code of
the second commodity, storing the commodity information of the second commodity if the first commodity code is not detected earlier.

10. The method according to claim 7, further comprising: in response to detecting thefirstcommodity codeofthe
first commodity, changing the stored commodity information of the second commodity
to commodity information to which the privilege is applied.

11. The method according to any one of claims 6 to 10, further comprising:
determining a plurality of the second commodities set in association with the first commodity.

12. A store system provided in a store, the system comprising at least one information processing apparatus (40) according to any one of claims 1 to 5, wherein the information processing apparatus (40) is located in the store, and the store system further comprises a server (10) connected to the information processing apparatus (40).
